# EUROPEAN PATENT SPECIFICATION

(11) **EP 2 090 595 B1**
(45) Date of publication and mention of the grant of the patent: **30.04.2014**
(21) Application number: 07850216.8
(22) Date of filing: 06.12.2007
(51) Int. Cl.: C08F 210/02, B65D 1/00, B65D 65/02, C08F 2/06, C08F 2/38, C08F 4/32, C08F 214/26, H01B 3/44

(54) **ETHYLENE/TETRAFLUOROETHYLENE COPOLYMER AND METHOD FOR PRODUCING THE SAME**
ETHYLEN/TETRAFLUORETHYLEN-COPOLYMER UND HERSTELLUNGSVERFAHREN DAFÜR
COPOLYMÈRE ÉTHYLÈNE/TÉTRAFLUOROÉTHYLÈNE ET SON PROCÉDÉ DE PRODUCTION

(30) Priority: 08.12.2006 JP 2006332642
(43) Date of publication of application: 19.08.2009
(73) Proprietor: Asahi Glass Company, Limited, Chiyoda-ku Tokyo 100-8405 (JP)
(72) Inventor: AIDA, Shigeru, Chiyoda-ku Tokyo 100-8405 (JP); IWAKURA, Yoshiaki, Chiyoda-ku Tokyo 100-8405 (JP); CHISAKA, Toshiyuki, Chiyoda-ku Tokyo 100-8405 (JP); KAMIYA, Hiroki, Chiyoda-ku Tokyo 100-8405 (JP)
(74) Representative: Müller-Boré & Partner Patentanwälte PartG mbB
(86) International application number: PCT/JP2007/073607
(87) International publication number: WO 2008/069278

(56) References cited:
- EP-A1- 1 162 212
- WO-A1-99/50319
- WO-A1-99/65954
- JP-A- 09 500 163
- JP-A- 2004 085 639
- JP-A- 2004 085 713
- JP-A- 2004 285 264
- US-A- 3 870 689
- US-A- 4 390 655

## Description

The present invention relates to a method for producing an ethylene/tetrafluoroethylene copolymer and a molded product of the ethylene tetrafluoroethylene copolymer.

An ethylene/tetrafluoroethylene copolymer (hereinafter referred to as ETFE) is excellent in heat resistance, chemical resistance, electrical insulation properties, flame retardancy, weather resistance and mold processability, and is used as an insulating covering material for cable to be used for airplanes, nuclear power plants, automobiles or industrial robots.

Heretofore, ETFE was efficiently produced by a method for polymerizing monomers such as ethylene, tetrafluoroethylene, etc. in the presence of at least one member selected from the group consisting of a polymerization medium containing chlorine atoms, a chain transfer agent containing chlorine atoms and a polymerization initiator containing chlorine atoms.

However, if a cable using, as an insulation cover material, ETFE obtained by such a production method was maintained at a high temperature in a state where the cable was bent, cracking was problematically formed. In order to solve such a problem, a method for efficiently producing ETFE excellent in heat-resistance has been proposed (see Patent Document 1). However, such a method is still insufficient, and a method for producing ETFE having higher heat-resistance has been desired.

Further, in a process for producing a semiconductor, there is a case where a product is defective due to inclusion of chlorine atoms, and a process-constituent material not containing chlorine atoms as far as possible has been desired.

Patent Document 1: Japanese Patent No. 3,305,400

It is an object of the present invention to provide a method for producing ETFE which is excellent in heat-resistance having a remarkably small chlorine atom content, which have been desired to be developed on the basis of the above background.

The present inventors have conducted extensive studies under the above circumstances, and as a result, have found that, contrary to our expectation that chain transfer is sacrificed at the time of polymerization, it is possible to produce ETFE excellent in heat-resistance by polymerization of ethylene with tetrafluoroethylene in an organic solvent containing no chlorine atoms as a polymerization medium, in the presence of a chain transfer agent containing no chlorine atoms and a polymerization initiator containing no chlorine atoms, and further in the substantial absence of a chain transferable compound having a carbon-chlorine atomic bond in the reaction system, and further the reason for excellent heat resistance is due to the low content of chlorine atoms in the obtained ETFE. The present invention has been accomplished on the basis of these discoveries.

That is, the present invention provides the following production method.
(1) A method for producing an ethylene/tetrafluoroethylene copolymer by solution polymerization, which comprises copolymerizing ethylene, tetrafluoroethylene and another copolymerizable monomer, in an organic solvent containing no chlorine atoms as a polymerization medium, wherein said polymerization medium is selected from a perfluorocarbon, a hydrofluorocarbon and a hydrofluoroether, in the presence of a chain transfer agent containing no chlorine atoms and a polymerization initiator containing no chlorine atoms, and further in the substantial absence of a chain transferable compound having a carbon-chlorine atomic bond in the reaction system,
   to produce an ethylene/tetrafluoroethylene copolymer which has a chlorine atom content of at most 70 ppm and a copolymerization ratio (molar ratio) of polymerized units based on tetrafluoroethylene/polymerized units based on ethylene being from 40/60 to 70/30, and which contains polymerized units based on another copolymerizable monomer in an amount of from 0.1 to 10 mol% based on the total polymerized units, and has a volume flow rate of from 0.01 to 1,000 mm³/sec.
(2) The method for producing an ethylene/tetrafluoroethylene copolymer according to the above (1), wherein said polymerization medium is CF₃(CF₂)₅H, and the chain transfer agent containing no chlorine atoms is methanol.
(3) The method for producing an ethylene/tetrafluoroethylene copolymer according to the above (1) or (2), wherein the polymerization initiator containing no chlorine atoms is an organic peroxide having a ten hour half-life temperature of from 20 to 60°C.
(4) A molded product of an ethylene/tetrafluoroethylene copolymer produced by the production method as defined in any one of the above (1) to (3).
(5) The molded product of an ethylene/tetrafluoroethylene copolymer according to the above (4), which is a wire, a tube, a film, a sheet, a bottle or a lining.
(6) A cable obtained by covering a core wire having a diameter of 1.8 mm with the ethylene/tetrafluoroethylene copolymer produced by the production method as defined in any one of the above (1) to (3), in a thickness of 0.5 mm, which is free from cracking when said cable is fixed as wound 8 times or more on the cable itself and left in an oven heated to 232°C for at least 500 hours.

ETFE produced by the production method of the present invention, is excellent in heat resistance, and a cable covered with the ETFE, to be used at a high temperature, is unlikely to undergo cracking even when the cable is bent. And even when such ETFE is used as a member for a production process of a semiconductor, the process is not adversely influenced .

ETFE produced by the production method of the present invention is a copolymer having polymerized units based on ethylene and polymerized units based on tetrafluoroethylene, and further contains polymerized units based on another copolymerizable monomer.

Such another copolymerizable monomer is not particularly limited so long as it contains no chlorine atoms, but may, for example, be vinyl fluoride, vinylidene fluoride, trifluoroethylene, hexafluoropropylene, CF₂=CFORf¹ (wherein, Rf¹ is a C₁₋₁₀ perfluoroalkyl group which may contain an etheric oxygen atom), CF₂=CFORf²SO₂X¹ (wherein, Rf² is a C₁₋₁₀ perfluoroalkylene group which may contain an etheric oxygen atom, and X¹ is a halogen atom other than a chlorine atom or a hydroxyl group), CF₂=CFORf²CO₂X² (wherein, Rf² is the same as the above, and X² is a hydrogen atom or a C₁₋₃ alkyl group), CF₂=CF(CF₂)ₚOCF=CF₂ (wherein, p is 1 or 2), CH₂=CX³(CF₂)_{q}X⁴ (wherein each of X³ and X⁴ which are independent of each other, is a hydrogen atom or a fluorine atom, and q is an integer of from 2 to 10), a fluorine-containing cyclic monomer such as perfluoro(2-methylene-4-methyl-1,3-dioxolane), perfluoro(2,2-dimethyl-1,3-dioxol) or perfluoro(4-methoxy-1,3-dioxol), a C₂₋₄ olefin such as propylene or isobutene, a vinyl ester such as vinyl acetate, or a vinyl ether such as ethyl vinyl ether or cyclohexyl vinyl ether. Such another copolymerizable monomer may be used alone or in combination as a mixture of two or more of them.

CF₂=CFORf¹ may, for example, be CF₂=CFOCF₃, CF₂=CFOCF₂CF₃, CF₂=CFOCF₂CF₂CF₃, CF₂=CFOCF₂CF₂CF₂CF₃ or CF₂=CFO(CF₂)₈F, preferably CF₂=CFOCF₂CF₂CF₃.

CH₂=CX³(CF₂)_{q}X⁴ may, for example, be CH₂=CH(CF₂)₂F, CH₂=CH(CF₂)₃F, CH₂=CH(CF₂)₄F, CH₂=CF(CF₂)₃H or CH₂=CF(CF₂)₄H, preferably CH₂=CH(CF₂)₂F or CH₂=CH(CF₂)₄F.

The ratio (molar ratio) of polymerized units based on tetrafluoroethylene/polymerized units based on ethylene is within a range of from 40/60 to 70/30, preferably from 50/50 to 65/35, more preferably from 51/49 to 60/40.

Further, the polymerized units based on another copolymerizable monomer, as an optional component, are contained in an amount of preferably from 0.1 to 10 mol%, more preferably from 0.3 to 8 mol%, most preferably from 0.5 to 5 mol%, based on the total polymerized units.

The ethylene/tetrafluoroethylene copolymer produced by the production method of the present invention contains substantially no chlorine atoms, and such a chlorine atom content is at most 70 ppm, preferably at most 60 ppm, more preferably at most 55 ppm, most preferably at most 50 ppm, based on the mass of the ethylene/tetrafluoroethylene copolymer.

According to the present invention, it is possible to produce ETFE by polymerizing ethylene with tetrafluoroethylene in an organic solvent containing no chlorine atoms as a polymerization medium, in the presence of a chain transfer agent containing no chlorine atoms and a polymerization initiator containing no chlorine atoms, and further in the substantial absence of a chain transferable compound having a carbon-chlorine atomic bond in the reaction system.

The polymerization medium containing no chlorine atoms, which is to be used in the present invention, is preferably a perfluorocarbon such as n-perfluorohexane, n-perfluoroheptane, perfluorocyclobutane, perfluorocyclohexane or perfluorobenzene, a hydrofluorocarbon such as 1,1,2,2-tetrafluorocyclobutane, CF₃CFHCF₂CF₂CF₃, CF₃(CF₂)₄H, CF₃CF₂CFHCF₂CF₃, CF₃CFHCFHCF₂CF₃, CF₂HCFHCF₂CF₂CF₃, CF₃(CF₂)₅H, CF₃CH(CF₃)CF₂CF₂CF₃, CF₃CF(CF₃)CFHCF₂CF₃, CF₃CF(CF₃)CFHCFHCF₃, CF₃CH(CF₃)CFHCF₂CF₃, CF₃CF₂CH₂CH₃ or CF₃(CF₂)₃CH₂CH₃, or a hydrofluoroether such as CF₃CH₂OCF₂CF₂H, CF₃(CF₃)CFCF₂OCH₃ or CF₃(CF₂)₃OCH₃, more preferably CF₃(CF₂)₅H or CF₃CH₂OCF₂CF₂H, most preferably CF₃(CF₂)₅H.

The chain transfer agent containing no chlorine atoms, to be used in the present invention, may preferably be an alcohol such as methanol, ethanol, 2,2,2-trifluoroethanol, 2,2,3,3-tetrafluoropropanol, 1,1,1,3,3,3,-hexafluoroisopropanol, 2,2,3,3,3-pentafluoropropanol, a hydrocarbon such as n-pentane, n-hexane or cyclohexane, a hydrofluorocarbon such as CF₂H₂, a ketone such as acetone, a mercaptan such as methyl mercaptan, an ester such as methyl acetate or ethyl acetate, an ether such as diethyl ether or methyl ethyl ether.

Among them, more preferred is an alcohol such as methanol, ethanol, 2,2,2-trifluoroethanol, 2,2,3,3-tetrafluoropropanol, 1,1,1,3,3,3-hexafluoroisopropanol or 2,2,3,3,3-pentafluoropropanol, most preferred is methanol.

The amount of the chain transfer agent containing no chlorine atoms is preferably from 0.01 to 50 mass%, more preferably from 0.02 to 40 mass%, most preferably from 0.05 to 20 mass%, based on the total weight of the polymerization solvent and the chain transfer agent.

The polymerization initiator containing no chlorine atoms, to be used in the present invention, is preferably a radical polymerization initiator containing no chlorine atoms, of which the temperature having a ten hour half-life (hereinafter referred to also as "a ten hour half-life temperature") is from 0 to 100°C, more preferably from 20 to 90°C, particularly preferably from 20 to 60°C. A specific example of the polymerization initiator containing no chlorine atoms may be an azo compound such as azobisisobutyronitrile, a peroxydicarbonate such as diisopropyl peroxydicarbonate, a peroxyester such as tert-butyl peroxypivalate, tert-butyl peroxyisobutylate or tert-butyl peroxyacetate, a non-fluorine type diacyl peroxide such as isobutyryl peroxide, octanoyl peroxide, benzoyl peroxide or lauroyl peroxide, a fluorine-containing diacyl peroxide such as (Z(CF₂)ₚCOO)₂ (wherein Z is a hydrogen atom, a fluorine atom or a chlorine atom, and p is an integer of from 1 to 10), perfluoro tert-butyl peroxide, or an inorganic peroxide such as potassium persulfate, sodium persulfate or ammonium persulfate.

In the production method of ETFE of the present invention, polymerization is carried out in the substantial absence of a chain transferable compound having a carbon-chlorine atomic bond in the reaction system. Here, the substantial absence is such that the chain transferable compound is present in an amount of preferably at most 100 ppm, more preferably at most 80 ppm, furthermore preferably at most 60 ppm, most preferably at most 50 ppm, based on the total mass of the polymerization medium, the chain transfer agent containing no chlorine atoms and the polymerization initiator containing no chlorine atoms.

ETFE produced by the production method of the present invention has a volume flow rate (hereinafter referred to as a Q value) of from 0.01 to 1,000 mm³/sec, preferably from 0.1 to 500 mm³/sec, more preferably from 1 to 200 mm³/sec. The Q value is an index representing the melt flow property of a fluorocopolymer, and is an indicator of the molecular weight. When the Q value is high, the molecular weight becomes low, and when the Q value is low, the molecular weight becomes high. The Q value is an extrusion velocity of the fluorocopolymer at the time when the copolymer is extruded into an orifice having a diameter of 2.1 mm and a length of 8 mm under a load of 7 kg at a temperature higher by 50°C than the melting point of the resin by using a flow tester manufactured by Shimadzu Corporation. When the Q value is within such a range, the fluorocopolymer is excellent in extrusion processability and mechanical strength.

The melting point of ETFE produced by the production method of the present invention is preferably from 150 to 280°C, more preferably from 180 to 275°C, most preferably from 230 to 270°C.

The production method of ETFE of the present invention may be a method of e.g. suspension polymerization, solution polymerization, emulsion polymerization or bulk polymerization, and suspension polymerization or solution polymerization is more preferred.

The polymerization conditions in the present invention are not particularly limited, but the polymerization temperature is preferably from 0 to 100°C, more preferably from 20 to 90°C. The polymerization pressure is preferably from 0.1 to 10 MPa, more preferably from 0.5 to 3 MPa. The polymerization time is preferably from 1 to 30 hours, more preferably from 2 to 20 hours.

The ethylene/tetrafluoroethylene copolymer produced by the production method of the present invention is free from cracking even when stress due to bending is applied thereon at a high temperature in such a case where a cable is molded with the copolymer (hereinafter, stress cracking at a high temperature may be referred to also as stress cracking).

### EXAMPLES

Now, the present invention will be described with reference to Examples and Comparative Examples, but the present invention is by no means restricted thereto. Further, methods for measuring physical properties of ETFE in Examples and Comparative Examples are shown as follows.

### Copolymer composition of ETFE

The copolymer composition of ETFE was measured by means of FT-IR.

### Volume flow rate: Q value (mm³/sec)

The Q value is represented by an extrusion velocity at the time of extruding ETFE from an orifice having a diameter of 2.1 mm and a length of 8 mm at a temperature of 297°C under a load of 7 kg by using a flow tester manufactured by Shimadzu Corporation.

### Melting point (°C)

The melting point was obtained from an endothermic peak at the time of heating ETFE to 300°C at 10°C/min in the air atmosphere by using a scanning differential thermal analyzer (DSC220CU, manufactured by SII NanoTechnology Inc.).

### Chlorine atom content (ppm)

By using an automated combustion gas trapping device AQF-100 (manufactured by Dia Instruments Co., Ltd.), 50 mg of ETFE was combusted at 1,000°C, and a decomposed gas was trapped by 25 mL of a trap liquid. Then, the trap liquid having the decomposed gas trapped therein was analyzed with an ion chromatography DX-500 (detector: conductivity detector, column: lonpac AG11 H+AS11 H, manufactured by Dionex Corporation) to quantify chlorine atoms.

### Stress crack resistance test

A cable obtained by covering a core wire having a diameter of 1.8 mm with ETFE in a thickness of 0.5 mm, was fixed as wound 8 times or more on the cable itself and left in an oven heated to 232°C to confirm occurrence of cracking with time. Five cables were evaluated for every lot. It is regarded as evidence of remarkably excellent stress crack resistance that a covered portion of the cable is free from cracking after expiration of at least 500 hours.

### EXAMPLE 1

Into an evacuated 430 L stainless-steel autoclave, 418.2 kg of CF₃(CF₂)₅H, 2.12 kg of (perfluorobutyl)ethylene and 3.4 kg of methanol were charged and heated to 66°C with stirring, a mixed gas of tetrafluoroethylene/ethylene = 84/16 (mol%) was introduced thereto so as to be 1.5 MPaG, and a solution obtained by mixing 26 g of a 50 wt% CF₃(CF₂)₅H solution of tert-butyl peroxypivalate and 4,974 g of CF₃(CF₂)₅H was injected thereto to initiate the polymerization. A mixed gas of tetrafluoroethylene/ethylene =54/46 (mol%) and (perfluorobutyl)ethylene in an amount corresponding to 1.4 mol% to the above mixed gas were continuously charged thereto so that the pressure would be 1.5 MPaG during the polymerization. After 34 kg of such a tetrafluoroethylene/ethylene mixed gas was charged, the autoclave was cooled, and a residual gas was purged to terminate polymerization.

An ETFE slurry obtained was put into a 850 L granulation tank, and 340 L of water was added thereto, followed by heating with stirring, to remove the solvent for polymerization and residual monomers thereby to obtain 35 kg of granulary ETFE1.

ETFE1 obtained had a composition of polymerized units based on tetrafluoroethylene/polymerized units based on ethylene/polymerized units based on (perfluorobutyl)ethylene = 54.2/44.1/1.7 mol%, a chlorine atom content being 49 ppm, Q value being 44 mm³/sec and a melting point being 255°C.

Such ETFE1 was formed into pellets by using a single screw extruder, and the pellets were subjected to melt extrusion molding to form a cable having a 1.8 mm-diameter core wire covered with ETFE1 in a thickness of 0.5 mm. The stress crack resistance of the cable thus obtained was tested, whereby no cracking was observed in five samples even after expiration of 528 hours.

### COMPARATIVE EXAMPLE 1

ETFE was produced in the same manner as in Example 1 except that the amount of CF₃(CF₂)₅H used was changed to 255.3 kg, the amount of (perfluorobutyl)ethylene used was changed to 2.08 kg, 158 kg of 1,3-dichloro-1,1,2,2,3-pentafluoropropane was used instead of methanol, and a solution obtained by mixing 32 g of a 50 wt% 1,3-dichloro-1,1,2,2,3-pentafluoropropane solution of tert-butyl peroxypivalate and 4,968 g of CF₃(CF₂)₅H, was used instead of the solution obtained by mixing 26 g of a 50 wt% CF₃(CF₂)₅H solution of tert-butyl peroxypivalate and 4,974 g of CF₃(CF₂)₅H, and 37 kg of granulary ETFE2 was obtained.

ETFE2 obtained had a composition of polymerized units based on tetrafluoroethylene/polymerized units based on ethylene/polymerized units based on (perfluorobutyl)ethylene = 54.4/44.2/1.4 mol%, a chlorine atom content being 599 ppm, a Q value being 40 mm³/sec and a melting point being 257°C.

Then, a cable covered with ETFE2 was formed and the stress crack resistance was tested in the same manner as in Example 1, and occurrence of cracking was confirmed at covered portions of all five cables upon expiration of 96 hours.

From the above results, ETFE1 obtained in Example 1 is found to be superior in heat resistance to ETFE2 obtained in Comparative Example 1. Further, in ETFE1 obtained in Example 1 the chlorine atom content is suppressed to a low level as compared with ETFE2 obtained in Comparative Example 1, and such an ETFE1 is suitable as a material for a semiconductor production process in which inclusion of chlorine atoms is required to be lowered to the utmost.

ETFE obtainable by the production process of the present invention has good thermal resistance. Therefore, they are useful for various applications, e.g. for wires, tubes, films, sheets, bottles and linings, and they are particularly suitable for a cable covering material to be used at a high temperature or a material to be used for a semiconductor production process.

## Claims

1. A method for producing an ethylene/tetrafluoroethylene copolymer by solution polymerization, which comprises copolymerizing ethylene, tetrafluoroethylene and another copolymerizable monomer, in an organic solvent containing no chlorine atoms as a polymerization medium, wherein said polymerization medium is selected from a perfluorocarbon, a hydrofluorocarbon and a hydrofluoroether, in the presence of a chain transfer agent containing no chlorine atoms and a polymerization initiator containing no chlorine atoms, and further in the substantial absence of a chain transferable compound having a carbon-chlorine atomic bond in the reaction system,
to produce an ethylene/tetrafluoroethylene copolymer which has a chlorine atom content of at most 70 ppm and a copolymerization ratio (molar ratio) of polymerized units based on tetrafluoroethylene/polymerized units based on ethylene being from 40/60 to 70/30, and which contains polymerized units based on another copolymerizable monomer in an amount of from 0.1 to 10 mol% based on the total polymerized units, and has a volume flow rate of from 0.01 to 1,000 mm³/sec.

2. The method for producing an ethylene/tetrafluoroethylene copolymer according to Claim 1, wherein said polymerization medium is CF₃(CF₂)₅H, and the chain transfer agent containing no chlorine atoms is methanol.

3. The method for producing an ethylene/tetrafluoroethylene copolymer according to Claim 1 or 2, wherein the polymerization initiator containing no chlorine atoms is an organic peroxide having a ten hour half-life temperature of from 20 to 60°C.

4. A molded product of an ethylene/tetrafluoroethylene copolymer produced by the production method as defined in any one of Claims 1 to 3.

5. The molded product of an ethylene/tetrafluoroethylene copolymer according to Claim 4, which is a wire, a tube, a film, a sheet, a bottle or a lining.

6. A cable obtained by covering a core wire having a diameter of 1.8 mm with the ethylene/tetrafluoroethylene copolymer produced by the production method as defined in any one of Claims 1 to 3, in a thickness of 0.5 mm, which is free from cracking when said cable is fixed as wound 8 times or more on the cable itself and left in an oven heated to 232°C for at least 500 hours.

## Patentansprüche

1. Verfahren zur Herstellung eines Ethylen/Tetrafluorethylen-Copolymers durch Lösungspolymerisation, welches das Copolymerisieren von Ethylen, Tetrafluorethylen und eines weiteren copolymerisierbaren Monomers in einem organischen Lösungsmittel, das keine Chloratome umfasst, als Polymerisationsmedium, wobei das Polymerisationsmedium aus einem Perfluorkohlenstoff, einem Fluorkohlenwasserstoff und einem Hydrofluorether ausgewählt ist, in der Gegenwart eines Kettenübertragungsmittels, das keine Chloratome enthält, und eines Polymerisationsinitiators umfasst, der keine Chloratome enthält, und wobei ferner eine kettenübertragbare Verbindung, die eine Kohlenstoff-Chlor-Atombindung aufweist, im Wesentlichen nicht in dem Reaktionssystem vorliegt,
so dass ein Ethylen/Tetrafluorethylen-Copolymer hergestellt wird, das einen Chloratomgehalt von höchstens 70 ppm und ein Copolymerisationsverhältnis (Molverhältnis) von polymerisierten Einheiten auf der Basis von Tetrafluorethylen/polymerisierten Einheiten auf der Basis von Ethylen von 40/60 bis 70/30 aufweist, und das polymerisierte Einheiten auf der Basis eines weiteren copolymerisierbaren Monomers in einer Menge von 0,1 bis 10 mol-% auf der Basis der gesamten polymerisierten Einheiten enthält und eine Volumenflussrate von 0,01 bis 1000 mm³/Sekunde aufweist.

2. Verfahren zur Herstellung eines Ethylen/Tetrafluorethylen-Copolymers nach Anspruch 1, bei dem das Polymerisationsmedium CF₃(CF₂)₅H ist und das Kettenübertragungsmittel, das keine Chloratome enthält, Methanol ist.

3. Verfahren zur Herstellung eines Ethylen/Tetrafluorethylen-Copolymers nach Anspruch 1 oder 2, bei dem der Polymerisationsinitiator, der keine Chloratome enthält, ein organisches Peroxid mit einer Zehn Stunden-Halbwertstemperatur von 20 bis 60 °C ist.

4. Formgegenstand aus einem Ethylen/Tetrafluorethylen-Copolymer, das durch das Herstellungsverfahren gemäß der Definition in einem der Ansprüche 1 bis 3 hergestellt worden ist.

5. Formgegenstand aus einem Ethylen/Tetrafluorethylen-Copolymer nach Anspruch 4, der ein Kabel, ein Rohr oder Schlauch, eine Folie, ein Flächengebilde oder Blatt, eine Flasche oder eine Auskleidung ist.

6. Kabel, das durch Bedecken eines Kerndrahts mit einem Durchmesser von 1,8 mm mit dem Ethylen/Tetrafluorethylen-Copolymer, das durch das Herstellungsverfahren gemäß der Definition in einem der Ansprüche 1 bis 3 hergestellt worden ist, in einer Dicke von 0,5 mm erhalten worden ist, das frei von Rissen ist, wenn das Kabel mit 8 oder mehr Windungen auf dem Kabel selbst fixiert ist und mindestens 500 Stunden erwärmt auf 232 °C in einem Ofen belassen wird.

## Revendications

1. Procédé pour produire un copolymère d'éthylène/ tétrafluoroéthylène par polymérisation en solution, qui comprend la copolymérisation d'éthylène, de tétrafluoroéthylène et d'un autre monomère copolymérisable, dans un solvant organique ne contenant pas d'atomes de chlore servant de milieu de polymérisation, dans lequel ledit milieu de polymérisation est choisi parmi un perfluorocarbure, un hydrofluorocarbure et un hydrofluoroéther, en présence d'un agent de transfert de chaîne ne contenant pas d'atomes de chlore et d'un amorceur de polymérisation ne contenant pas d'atomes de chlore, et en outre pratiquement en l'absence de composé pouvant réaliser un transfert de chaîne et comportant une liaison atomique carbone-chlore dans le système réactionnel,
pour produire un copolymère d'éthylène/ tétrafluoroéthylène présentant une teneur en atomes de chlore d'au plus 70 ppm, présentant un rapport de copolymérisation (rapport molaire) des motifs polymérisés à base de tétrafluoroéthylène sur les motifs polymérisés à base d'éthylène de 40/60 à 70/30, contenant des motifs polymérisés à base d'un autre monomère copolymérisable en une quantité de 0,1 à 10 % en moles par rapport au total des motifs polymérisés, et présentant un débit volumique de 0,01 à 1000 mm³/s.

2. Procédé pour produire un copolymère d'éthylène/ tétrafluoroéthylène selon la revendication 1, dans lequel ledit milieu de polymérisation est CF₃(CF₂)₅H, et l'agent de transfert de chaîne ne contenant pas d'atomes de chlore est le méthanol.

3. Procédé pour produire un copolymère d'éthylène/ tétrafluoroéthylène selon la revendication 1 ou 2, dans lequel l'amorceur de polymérisation ne contenant pas d'atomes de chlore est un peroxyde organique présentant une température de demi-vie à dix heures de 20 à 60°C.

4. Produit moulé d'un copolymère d'éthylène/ tétrafluoroéthylène produit par le procédé de production tel que défini dans l'une quelconque des revendications 1 à 3.

5. Produit moulé d'un copolymère d'éthylène/ tétrafluoroéthylène selon la revendication 4, qui est un fil, un tube, un film, une feuille, une bouteille ou une doublure.

6. Câble obtenu par revêtement d'un fil de coeur ayant un diamètre de 1,8 mm avec le copolymère d'éthylène/ tétrafluoroéthylène produit par le procédé de production tel que défini dans l'une quelconque des revendications 1 à 3, en une épaisseur de 0,5 mm, qui est exempt de fissures quand ledit câble est fixé en étant enroulé 8 fois ou plus sur le câble lui-même et laissé dans un four chauffé à 232°C pendant au moins 500 heures.
